# EUROPEAN PATENT APPLICATION

(11) **EP 1 615 221 A2**
(43) Date of publication of application: **11.01.2006**
(21) Application number: 05254255.2
(22) Date of filing: 06.07.2005
(51) Int. Cl.: G11B 27/32, G11B 27/034, G11B 20/12, H04N 5/76

(54) **Optical recording and reproducing apparatus for making one title automatically after relay recording and method thereof**

(30) Priority: 06.07.2004 KR 2004052330
(71) Applicant: SAMSUNG ELECTRONICS CO., LTD., Suwon-si, Gyeonggi-do (KR)
(72) Inventor: Han, In-ho, Suwon-si, Gyeonggi-do (KR)
(74) Representative: Robinson, Ian Michael

(57) **Abstract**

Disclosed is an optical recording and reproducing apparatus for making one title automatically after a relay recording and a method thereof. The disclosed method includes the steps of performing a relay recording such that some of audio visual (AV) signals that are not recorded onto an optical disc (150a) are recorded onto a recording medium (160) in case of insufficient optical disc (150a) capacity during recording of the AV signals in a stream type; and combining said some of the AV signals with the rest of the AV signals when the relay recording is terminated and storing the combined AV signals as one title onto the recording medium (160). That is, one title is automatically created onto the recording medium (160) and is subsequently copied onto one or more than one optical disc (150a). Hence, a user can watch images recorded onto the recording medium (160) or the optical disc (150a) and own a plurality of copied optical discs (150a).

## Description

The present invention relates in general to an optical recording and reproducing apparatus for recording image source onto an optical disc and/or onto a recording medium such as a hard disc drive (HDD), and a method thereof.

As broadcasting signals have been digitalized and compression technology has advanced, optical recording and reproducing apparatus capable of recording broadcasting signals onto a recording medium and reproducing the recorded broadcasting signals has progressed with expanded functions. Especially, the development of optical recording and reproducing apparatuses has focused on being compatible with various image sources such as satellite broadcasting signals, cable broadcasting, network broadcasting through the use of the Internet and so forth. Also, the digitalization of data and advancement in compression technology has led to the developmental stage of recording data onto an optical media medium such as a compact disc-read only memory (CD-ROM) title or a digital versatile disc (DVD) title, or reproducing the recorded data. This type of optical medium barely degrades image quality over the course of long usage periods. Also, since the optical medium is capable of storing high-quality images and audio data of multi-channels, for instance, 5.1 channels, the optical medium has rapidly replaced conventional analog image recording media.

Furthermore, optical medium, for instance, the DVD title for storing image data and audio data, is capable of storing data typically from several hundred megabytes to several gigabytes. In particular, a recently developed optical recording and reproducing apparatus adopts a HDD, which is a memory device with a high capacity for storing enormous amounts of data and that is easily read.

A DVD/HDD optical recording and reproducing apparatus is one representative example. The DVD/HDD optical recording and reproducing apparatus is cond such that a DVD drive for recording data and reproducing the recorded data and a HDD for recording data are combined together within one case. Generally, the DVD drive reproduces individual data recorded onto an optical disc recording medium such as a DVD, an audio CD, a video CD, a MP3 CD or the like.

In the case that the HDD is subjected to a relay recording because of insufficient disc capacity when a user records received signals from an external source by using an optical disc of the DVD drive, two titles are separately recorded onto corresponding recording media. That is, one title is recorded onto the optical disc and the other title is recorded onto the HDD.

However, to watch a program split with two titles, there may be inconvenience requiring two recording media, that is, the optical disc and the HDD.

According to the present invention there is provided an apparatus and method as set forth in the appended claims. Preferred features of the invention will be apparent from the dependent claims, and the description which follows.

The present invention provides an optical recording and reproducing apparatus for making one title automatically after relay recording is employed when capacity of an optical disc is insufficient when an image source is recorded onto the optical disc because the relay recording enables creation of one predetermined title onto a recording medium such as a hard disc drive (HDD) and a method thereof.

In accordance with one aspect of the present invention, there is provided an optical recording and reproducing method for an optical recording and reproducing apparatus, including performing a relay recording such that some of audio visual (AV) signals that are not recorded onto an optical disc are recorded onto a recording medium in case of insufficient optical disc capacity when the AV signals in a stream type from an image source are recorded onto the optical disc; and combining some of the AV signals recorded onto the recording medium with the rest of the AV signals recorded onto the optical disc when the relay recording is terminated, and storing the combined AV signals as one title onto the recording medium.

The optical recording and reproducing method further includes requesting a selection of whether to record the one title onto a new optical disc; and recording the one title onto the new optical disc when recording of the one title onto the new optical disc is selected.

The request of selecting whether to record the one title onto the new optical disc may proceed by displaying a corresponding message.

Particularly, recording the one title onto the new optical disc includes requesting to set the number of new optical discs to be copied and setting the intended number of the new optical discs to be copied; requesting to install a new optical disc onto an optical disc drive, detecting the installation of the new optical disc, and recording the one title onto the new optical disc; and recording the one title repeatedly onto each of the different optical discs until the number of recorded new optical discs is identical to the set number of the new optical discs.

Requesting to set the number of the new optical discs to be copied and the step of requesting to install the new optical disc onto the optical disc drive may be executed by displaying corresponding messages.

The aforementioned recording medium may be a hard disc drive.

The optical disc and the new optical disc may be compact discs (CDs) or digital versatile discs (DVDs).

In accordance with another aspect of the present invention, there is provided an optical recording and reproducing apparatus, including an optical disc drive for recording audio video (AV) signals in a stream type from an image source onto an optical disc and reading the recorded AV signals; a recording medium onto which the AV signals in the stream type are recorded; and a control unit for controlling the optical disc drive and the recording medium to store the AV signals as one title onto the recording medium through detecting insufficient optical disc capacity during the recording of the AV signals onto the optical disc, performing a relay recording of the AV signals that are not recorded onto the optical disc to the recording medium, and combining the some of the AV signals recorded onto the recording medium with the rest of the AV signals recorded onto the optical disc when the relay recording is terminated.

Also, the optical recording and reproducing apparatus further includes a key input unit. After the recording of the AV signals as the one title, the control unit controls the optical disc drive such that the one title is recorded onto a new optical disc when a recording selection signal is input to the new optical disc through the key input unit.

Preferably, the optical recording and reproducing apparatus includes a display unit. After the recording of the AV signals as the one title, the control unit controls the display unit to display a message requesting whether to select the recording of the one title onto the new optical disc.

Furthermore, the control unit may control the optical disc drive to record the one title onto each of the different new optical discs in a repetitive manner by detecting installation of the new optical disc when the number of signals corresponding to the intended number of optical discs to be copied and a signal for selecting recording of the one title onto the new optical disc are input through the key input unit, recording the one title onto the installed new optical disc, determining whether the number of recorded optical discs is identical to the intended number of new optical discs to be copied, and repeating the recording of the one title onto each of the different new optical discs until the number of the recorded optical discs becomes identical to the intended number of new optical discs.

As mentioned above, the optical recording and reproducing apparatus further includes display unit. The control unit controls the display unit to display a message requesting an input of the number of new optical discs to be copied and another message requesting installation of the new optical disc.

The recording medium may be a hard disc drive.

Additionally, the optical disc and the new optical disc may be DVDs or CDs.

Additional aspects and/or advantages of the invention will be set forth in part in the description which follows and, in part, will be apparent from the description, or may be learned by practice of the invention.

The above aspects and features of the present invention will be more apparent by describing certain embodiments of the present invention with reference to the accompanying drawings, in which:
Figure 1 is a block diagram showing an optical recording and reproducing apparatus for making one title automatically after a relay recording in accordance with an embodiment of the present invention; and
Figure 2 is a flowchart describing a method for making one title automatically after a relay recording in accordance with an embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the s.

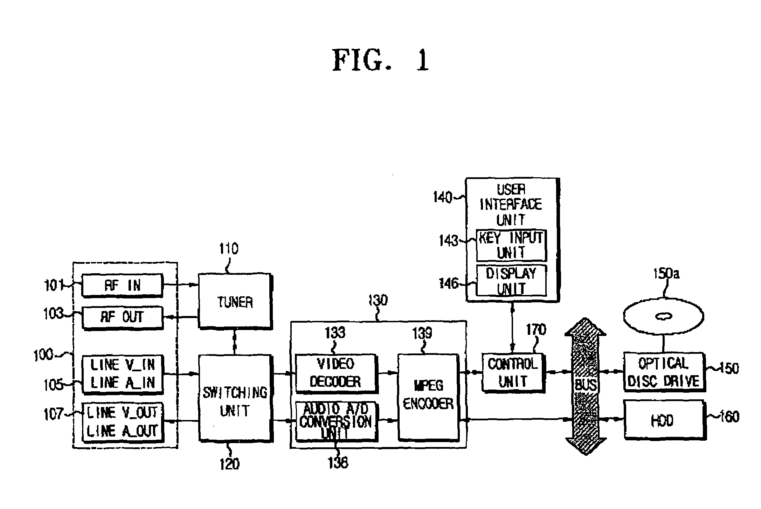

Figure 1 is a block diagram showing an optical recording and reproducing apparatus for making one title automatically after a relay recording in accordance with an embodiment of the present invention.

With reference to Figure 1, the optical recording and reproducing apparatus includes an input and output terminal unit 100, a tuner 110, a switching unit 120, a moving picture experts group (MPEG) encoding unit 130, a user interface unit 140, an optical disc drive 150, a hard disc drive (HDD) 160, and a control unit 170.

The input and output terminal unit 100 inputs signals generated from various image signal sources and outputs signals reproduced from the optical disc drive 150 and the HDD 160.

The input and output terminal unit 100 includes a radio frequency input terminal (RF IN) 101, a RF output terminal (RF OUT) 103, a line video and audio input terminal (LINE V_IN and LINE A_IN) 105, and a video and audio output terminal (LINE V_OUT and LINE A_OUT) 107.

Herein, one of the above input terminals and output terminals having the same signal types except for input and output relationships will be described in detail. The RF input terminal 101 is a terminal for receiving sky wave broadcasting signals and is typically connected to an antenna.

The line video and audio input terminal 105 is a terminal for receiving analog signals mixed with a brightness signal Y and color signals, and is connected to a camcorder, set-top-boxes or the like supporting outputs of analog signals.

The tuner 110 adjusts a receiver channel to allow broadcasting signals from a channel specifically requested by an input and output control unit (not shown) to be received through the RF input terminal 101.

The switching unit 120 is controlled by the input and output control unit (not shown) and, especially controls those input and output terminals of the input and output terminal unit 100 connected to the switching unit 120 to be connected selectively with each other.

The MPEG encoding block 130 includes a video decoder 133, an audio analog-to-digital (A/D) conversion unit 136, and an MPEG encoder 139.

The video decoder 133 decodes signals input through the switching unit 120 and outputs decoded signals. The audio A/D conversion unit 136 converts analog audio signals input through the switching unit 120 into digital signals and outputs the converted signals to the MPEG encoder 139.

The MPEG encoder 139 is controlled by the control unit 170, and compresses the audio signals output from the audio A/D conversion unit 136 and the video signals output from the video decoder 133 into a predetermined compression format type, thus generating audio visual (AV) signals in a stream type.

The user interface block 140 includes a key input unit 143 and a display unit 146.

The key input unit 143 allows a user to input a manipulation command signal, a selection signal for recording one title of the HDD 160 onto a new optical disc, and signals corresponding to the number of new optical discs that a user intends to copy.

The display unit 146 displays a message asking the user whether to copy one title of the HDD 160 onto a new optical disc, for instance, "Do you want to copy this title onto a new optical disc?" Another message asks the number of new optical discs to be copied, for instance, "Please enter the number of optical discs to be copied." Another message asks the user to install a new optical disc, for instance, "Please install an optical disc."

The optical disc drive 150 records the AV signals in the stream type generated by the MPEG encoder 139 onto an optical disc 150a, or reads the AV signals recorded onto the optical disc 150a. The optical disc 150a can be a digital versatile disc (DVD) or a compact disc (CD).

The AV signals in the stream type generated by the MPEG encoder 139 are recorded onto the HDD 160.

The control unit 170 detects whether the capacity of the optical disc 150a runs out in the course of the AV signals in the stream type generated by the MPEG encoder 139 are recorded onto the optical disc 150a.

If the optical disc capacity runs out, the AV signals are subjected to a relay recording applied onto the HDD 160. After the relay recording is terminated, the control unit 170 controls the optical disc drive 150 to read some of the AV signals recorded onto the optical disc 150a. Subsequently, through another control by the control unit 170, the read AV signals recorded onto the optical disc 150a are combined with some of the AV signals recorded onto the HDD 160, and these combined AV signals are stored as one title onto the HDD 160 thereafter.

The control unit 170 controls the display unit 146 to display a message whether to copy the one title of the HDD 160 onto a new optical disc after the control unit 170 stores the one title onto the HDD 160.

If a recording selection signal is input to the new optical disc through the key input unit 143, the control unit 170 controls the display unit 146 to display a message asking a user about the number of new optical discs to be copied.

When signals having the corresponding number to that of the new optical discs to be copied are input through the key input unit 143, the display unit 170 controls the display unit 146 to display a message asking a user to install a new optical disc.

The control unit 170 detects the installation of the new optical disc, and when the installation of the new optical disc is detected, the control unit 170 makes the optical disc drive 150 dub the one title of the HDD 160 onto the installed new optical disc. Afterwards, the control unit 170 determines whether the number of the recorded new optical discs is identical to the intended number of the new optical discs to be copied.

If the same number of the new optical discs is recorded, the control unit 170 terminates the recording of the one title onto the new optical disc.

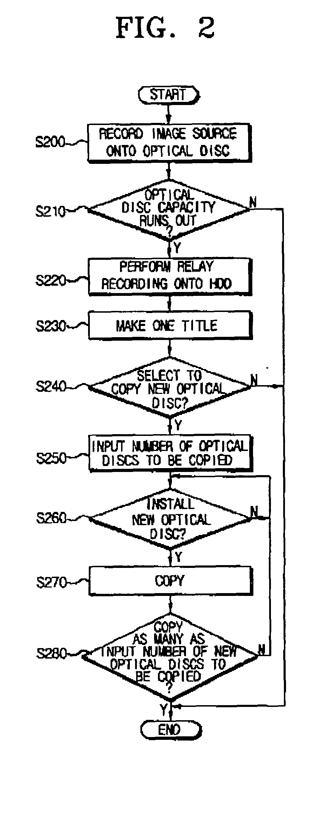

Figure 2 is a flowchart describing an optical recording and reproducing method for making one title automatically after a relay recording in accordance with an embodiment of the present invention. With reference to Figures 1 and 2, at operation S200, AV signals in a stream type from an image source including broadcasting signals are recorded onto the optical disc 150a by the optical disc drive 150.

At operation S210, the control unit 170 detects whether capacity of the optical disc 150a runs out in the course of recording the AV signals onto the optical disc 150a.

At operation S220, if the capacity of the optical disc 150a runs out, the rest of the AV signals that are not recorded onto the optical disc 150a are subjected to a relay recording onto the HDD 160.

Conversely, if the capacity of the optical disc 150a does not run out during the recording of the AV signals, the executed recording is terminated.

When the relay recording with respect to the HDD 160 is terminated, at operation S230, through control by the control unit 170, some of the AV signals recorded onto the optical disc 150a by the optical disc drive 150 are read, and the read AV signals are combined with the rest of the AV signals recorded onto the HDD 160 so that one title is created onto the HDD 160.

Afterwards, a message asking whether or not the one title of the HDD 160 should be dubbed onto a new optical disc is displayed on the display unit 146, and at operation S240, the key input unit 143 is used to select whether to dub the one title of the HDD 160 onto the new optical disc.

If the dubbing of the one title of the HDD 160 is selected, at operation S250, the display unit 146 displays a message asking a user about the number of new optical discs to be copied, and the intended number of new optical discs to be copied is selected through the key input unit 143.

The display unit 146 displays a message to install the new optical disc, and at operation S260, the control unit 170 detects whether the new optical disc is installed on the optical disc drive 150.

Once the new optical disc installation is detected, at operation S270, the optical disc drive 150 records the one title of the HDD 160 onto the new optical disc.

At operation S280, the control unit 170 detects whether the number of the recorded new optical discs is identical to the intended number of the new optical discs to be copied.

If these two numbers are the same, the relay recording is terminated.

Conversely, if the number of the recorded new optical discs is not same as the intended number of the new optical discs to be copied, at operation S260, the display unit 146 displays a message requesting installation of a new optical disc.

The above operations are repeated until the number of the recorded new optical discs is identical to the intended number of the new optical discs to be copied.

In accordance with an embodiment of the present invention, as a relay recording is conducted because of insufficient optical disc capacity when AV signals from an image source are recorded onto an optical disc, AV signals recorded onto each of the optical disc and a HDD are stored as one title automatically, which is, in turn, dubbed onto one or more optical discs. As a result, a user can watch the recorded image through one recording medium selected between either the HDD and the optical disc. Also, it is possible to collect a plurality of copied optical discs.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical recording and reproducing method of an optical recording and reproducing apparatus, comprising:
performing a relay recording such that some of audio visual (AV) signals that are not recorded onto an optical disc (150a) are recorded onto a recording medium (160) in case of insufficient optical disc capacity when the AV signals in a stream type from an image source are recorded onto the optical disc (150a); and
combining said some of the AV signals recorded onto the recording medium (160) with the rest of the AV signals recorded onto the optical disc (150a) when the relay recording is terminated, and storing the combined AV signals as one title onto the recording medium (160).

2. The optical recording and reproducing method of claim 1, further comprising:
requesting a selection whether to record said one title onto a new optical disc (150a); and
recording said one title onto the new optical disc (150a) when recording of said one title onto the new optical disc (150a) is selected.

3. The optical recording and reproducing method of claim 2, wherein the request of selecting whether to record said one title onto the new optical disc (150a) proceeds by displaying a corresponding message.

4. The optical recording and reproducing method of claim 2 or 3, wherein recording said one title onto the new optical disc comprises:
requesting to set the number of new optical discs (150a) to be copied and setting the intended number of the new optical discs (150a) to be copied;
requesting to install a new optical disc (150a) onto an optical disc drive (150), detecting the installation of the new optical disc (150a), and recording said one title onto the new optical disc (150a); and
recording said one title repeatedly onto each of different optical discs (150a) until the number of recorded new optical discs (150a) is identical to the set number of the new optical discs (150a).

5. The optical recording and reproducing method of claim 4, wherein requesting to set the number of the new optical discs to be copied and requesting to install the new optical disc (150a) onto the optical disc drive (150) are executed by displaying corresponding messages.

6. The optical recording and reproducing method of any preceding claim, wherein the recording medium (160) is a hard disc drive.

7. The optical recording and reproducing method of any preceding claim, wherein the optical disc and the new optical disc (150a) are one of compact discs (CDs) and digital versatile discs (DVDs).

8. An optical recording and reproducing apparatus, comprising:
an optical disc drive (150) for recording audio video (AV) signals in a stream type from an image source onto an optical disc (150a) and reading the recorded AV signals;
a recording medium (160) onto which the AV signals in the stream type are recorded; and
a control unit (170) for controlling the optical disc drive (150) and the recording medium (160) to store the AV signals as one title onto the recording medium (160) through detecting insufficient optical disc (150a) capacity during the recording of the AV signals onto the optical disc (150a), performing a relay recording of the AV signals that are not recorded onto the optical disc (150a) to the recording medium (160), and combining said some of the AV signals recorded onto the recording medium (160) with the rest of the AV signals recorded onto the optical disc (150a) when the relay recording is terminated.

9. The optical recording and reproducing apparatus of claim 8, further comprising a key input unit (143), wherein the control unit (170), after the recording of the AV signals as said one title, controls the optical disc drive (150) such that said one title is recorded onto a new optical disc (150a) when a recording selection signal is input to the new optical disc (150a) through the key input unit (193).

10. The optical recording and reproducing apparatus of claim 9, further comprising a display unit (146), wherein the control unit (170), after the recording of the AV signals as said one title, controls the display unit (146) to display a message requesting whether to select the recording of said one title onto the new optical disc (150a).

11. The optical recording and reproducing apparatus of claim 9, wherein the control unit (170) controls the optical disc drive (150) to record said one title onto each of different new optical discs (150a) in a repetitive manner by detecting installation of the new optical disc (150a) when the number of signals corresponding to the intended number of optical discs (150a) to be copied and a signal for selecting recording of said one title onto the new optical disc (150a) are input through the key input unit (143), recording said one title onto the installed new optical disc (150a), determining whether the number of recorded optical discs (150a) is identical to the intended number of the new optical discs (150a) to be copied, and repeating the recoding of said one title onto each of different new optical discs (150a) until the number of the recorded optical discs (150a) becomes identical to the intended number of the new optical discs (150a).

12. The optical recording and reproducing apparatus of claim 11, further comprising a display unit (146), wherein the control unit (170) controls the display unit (146) to display a message requesting an input of the number of new optical discs (150a) to be copied and another message requesting installation of the new optical disc (150a).

13. The optical recording and reproducing apparatus of any of claims 8 to 12, wherein the recording medium (160) is a hard disc drive.

14. The optical recording and reproducing apparatus of any of claims 8 to 13, wherein the optical disc (150a) and the new optical disc (150a) are one of digital versatile discs (DVDs) and compact discs (CDs).

15. An optical recording and reproducing method for making one title automatically after a relay recording, the method comprising:
recording audio visual signals in a stream type from an image source onto an optical disc (150a) by an optical disc drive (150);
detecting whether the capacity of the optical disc (150a) runs out during the recording of the audio visual signals onto the optical disc (150a);
relay recording the audio visual signals onto a recording medium (160) if the capacity of the optical disc (150a) runs out;
combining the audio visual signals recorded on the optical disc (150a) with the audiovisual signals relay recorded on the recording medium (160); and
storing the combined audio visual signals from the optical disc (150a) and the recording medium (160) under one title in the recording medium (160).

16. The method of claim 15, further comprising:
determining if the one title will be dubbed onto a new optical disc (150a); and
dubbing the one title onto a new optical disc (150a).

17. The method of claim 15, further comprising:
determining if the one title will be dubbed onto more than one new optical discs (150a);
determining a number of new optical discs (150a) that will be dubbed; and
dubbing the one title onto the number of new optical discs (150a).

18. The method of claim 16, wherein the determination of if the one title will be dubbed onto a new optical disc (150a) comprises:
displaying a message on a display unit (146) to ask if the one title will be dubbed onto a new optical disc (150a); and
selecting whether to dub the one title onto a new input unit using a key input unit (143).

19. The method of any of claims 15 to 18, wherein the recording medium (160) is a hard disc drive.

20. The method of any of claims 15 to 19, wherein the optical disc (150a) and the new optical disc (150a) are either compact discs or digital versatile discs.

21. The method of any of claims 15 to 20, wherein the image source includes broadcast signals.
